Europäisches Patentamt

European Patent Office

Office européen des brevets

(19)

(11) Veröffentlichungsnummer: **0 334 901 B1**

(12) # EUROPÄISCHE PATENTSCHRIFT

(45) Veröffentlichungstag der Patentschrift:
21.11.91 Patentblatt 91/47

(51) Int. Cl.⁵: **H02K 21/12, H02K 41/03,**
**H02K 29/00**

(21) Anmeldenummer: **88901582.2**

(22) Anmeldetag: **05.02.88**

(86) Internationale Anmeldenummer:
**PCT/EP88/00086**

(87) Internationale Veröffentlichungsnummer:
**WO 88/06375 25.08.88 Gazette 88/19**

(54) TRANSVERSALFLUSSMASCHINE IN SAMMLERANORDNUNG.

(30) Priorität: **13.02.87 DE 3705089**

(43) Veröffentlichungstag der Anmeldung:
**04.10.89 Patentblatt 89/40**

(45) Bekanntmachung des Hinweises auf die
Patenterteilung:
**21.11.91 Patentblatt 91/47**

(84) Benannte Vertragsstaaten:
**AT BE CH DE FR GB IT LI LU NL SE**

(56) Entgegenhaltungen:
**CH-A- 405 495**
**DE-A- 2 925 867**

(56) Entgegenhaltungen:
**DE-A- 3 536 538**
**US-A- 3 411 059**
**Patent Abstracts of Japan,vol.5,Nr:51**
**(E-51)(723),10 April 1981,& JP,A,563570**

(73) Patentinhaber: **J.M. Voith GmbH**
**Sankt Pöltener Strasse 43**
**W-7920 Heidenheim (DE)**

(72) Erfinder: **WEH, Herbert**
**Wöhlerstr. 20**
**W-3300 Braunschweig (DE)**

(74) Vertreter: **Weitzel, Wolfgang, Dr.-Ing. et al**
**Friedenstrasse 10**
**W-7920 Heidenheim (DE)**

**Beschreibung**

Die Erfindung bezieht sich auf eine Wechselstrommnschine nach dem Oberbegriff des unabhängigen Anspruches.

Bei bekannten Wechselstrommaschinen der gennanten Art (EP-A-201 021) wird das Leerlauffied über im rotierenden Erregerteil eingebettete Permanentmagnete erzeugt, deren flußführende Polflächen der Luftspaltebene zugewandt sind. Bei dieser Ausbildung des Erregersystems steigen die Kräfte mit zunehmender Magnetdicke. Die Kraftsteigerung findet ihre Grenze, wenn die Magnethöhe in die Nähe der Polteilung kommt. Dann nimmt die Wirksamkeit des Ankerfeldes ab, da dieses nicht mehr den inneren Bereich der Permanentmagnete erreicht. Das Ankerfeld geht dann mehr und mehr in ein in Längsrichtung verlaufendes Streufeld über. Dieses Feldverfahren ist in Verbindung damit zu sehen, daß auf jeder Ankerseite Polelemente mit wechselnder Polarität angeordnet sind. Den so vorhandenen Potentialdifferenzen entsprechend bilden sich Streuflüsse aus, die sich den kraftbildenden Feldkomponenten überlagern. Sie belasten den magnetischen Kreis, vergrößern die Induktivität und tragen somit zur Verzögerung der Kommutierung bei.

Wegen der Begrenzung der Magnethöhe sind weiter die Möglichkeiten zur Verkleinerung der Polteilung begrenzt. Eine Verkleinerung der Polteilung führt bei den bekannten Wechselstrommaschinen zu einer Reduzierung der Magenthöhe und damit zwangsläufig zu einer Flußreduzierung. Eine kleine Polteilung ist aber bei Maschinen mit Transversalflußführung erwünscht, da sie kleinere Wicklungsverluste aufgrund der geringeren wirksamen Wicklungslänge ermöglicht.

Es ist weiter bekannt (EP-A-126 997), Permanentmagnete nicht nur in der Form der direkten Zuordnung zum Nutzspalt (Flachanordnung) anzuwenden, bei der die Flußdichte im Nutzspalt etwa gleich der der Permanentmagnete ist, sondern auch in Sammlerkonfiguration, bei der die Permanentmagnete im wesentlichen senkrecht zum Nutzspalt liegen. Die Permanentmagnete liegen hierbei zwischen Weicheisenpolen, und die Querschnittsfläche der Permanentmagnete ist größer als die dem Nutzplast zugewandte Fläche des Poles. Hierdurch kann die Flußdichte im Magneten geringer gehalten werden als im Nutzplast. Die Nachteile der bekannten Sammleranordnung bestehen in horer Ankerrückwirkung und großem Streufluß. Diese Nachteile werden nach der Lehre der EP-A-126 997 dadurch ausgeschaltet, daß die Weicheisenpole des Rotors zwei benachbarte Teilpole aufweisen, zwischen denen ein magnetisch nicht leitender Trennspalt vorgesehen ist, der größer ist als der Nutzspalt, und daß die Teilpole vom Nutzsplat ausgehend konvergierend ausgebildet sind. Die Teilpole sind dabei zweckmäßig quer zur Bewegungsrichtung in eine Mehrzahl von Pollamellen geteilt, die durch nichtmagnetische Zwischenräume getrennt sind und die bei ungeteilten Polen auftretende starke Ankerrückwirkung mindern. Weiter soll die Ausbildung der Teilpole mit Pollamellen ebenso wie eine möglichst große Magnethöhe einer Feldverzerrung im Nutzsplat entgegenwirken.

Aufgabe der Erfindung ist es, Wechselstrommaschinen der gattungsgemäßen Art so auszubilden, daß solche Maschinen sowohl mit höheren Wirkungsgraden als auch mit höheren Leistungsdichten ausführbar sind.

Diese Aufgabe wird gemäß der Erfindung gelöst durch die im kennzeichnenden Teil des unabhängigen Anspruches herausgestellten Merkmale.

Die erfindungsgemäße Ausbildung des Erregerteils biedet auch Vorteile für die Auslegung des Stators. Der genenüber des Flachanordnung kleinere magnetisch wirksame Luftspalt läßt für gleiche Kraftdichten eine kleinere Ankerdurchflutung zu. Es kann aber auch mit gleicher Ankerdurchflutung eine höhere Kraftdichte (Kraft je Volumeneinheit und Kraft je Masseneinheit) erzielt werden.

Zweckmäßige Ausgestaltungen der Erfindung sind Gegenstand der abhängigen Ansprüche.

Die Erfindung ist in der Zeichnung in Ausführingsbeispielen veranschaulicht und im nachstehenden im einzelnen anhand der Zeichnung beschrieben. In einzelnen zeigen:

Fig. 1 schematisch den Aufbau der Wechselstrommaschine;

Fig. 2 die von den Permantentmagneten hervorgerufenen magnetischen Flüsse bei drei verschiedenen Stellungen des Erregerteils relativ zum Ankerteil;

Fig. 3 eine Ansicht des Erregerteils in der Ausführung nach Fig. 1 mit eingezeichneten Magnetisierungsrichtungen der einzelnen Permanentmagnete;

Fig. 4 im Schnitt eine schematische Darstellung einer Maschinenausführung mit einer Mehrzahl axial nebeneinander angeordneter Wechselstrommaschinen, die auf einen gemeinsamen Rotor wirken;

Fig. 5 eine Schaltung für eine Wechselstrommaschine gemäß der Erfindung.

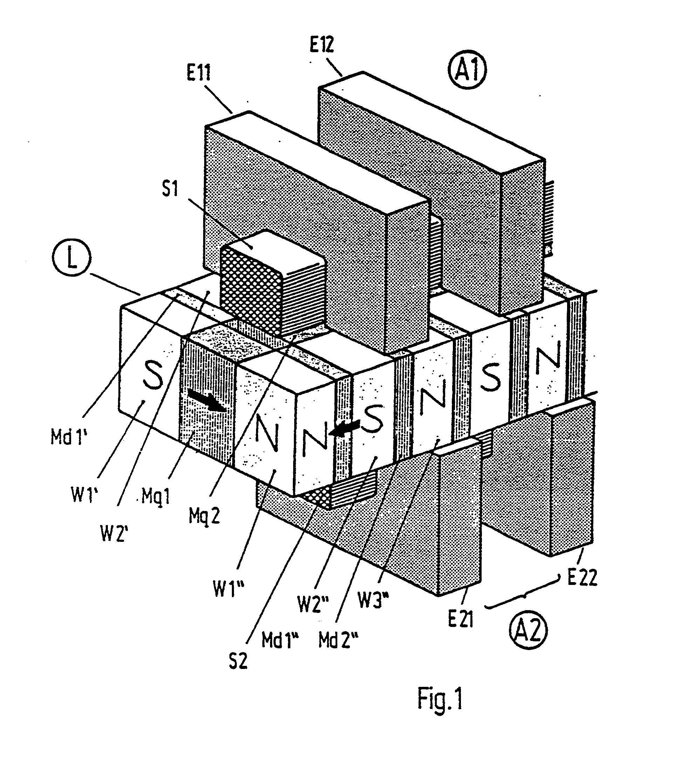

In Fig. 1 ist eine obere Ankeranordnung A1 und eine untere Ankeranordnung A2 erkennbar, die über den Luftsplat an den Läufer L anschließen. Die Anordnung ist zur Vereinfachung in linearer Form gezeichnet. Die Ankeranordnung A1 besteht dann aus den das magnetische Feld führenden Polelementen E11, E12, ... und dem zugeordneten Teil der Ankerspule S1.

Eine analoge Bezeichnung der entsprechenden Elemente ist für die Anordnung A2 vorgesehen. Es ist erkennbar, daß die Ankeranordnung Polelemente im Abstand der zweifachen Polteilung aufweist, woraus hervorgeht, daß damit jeweils gleiche Polarität vorliegt. Streuflußkomponenten in Längsrichtung sind also im Gesensatz etwa zu der bekannten Anordnung nach der WO 87/02525 vermieden.

Der das magnetische Feld führende Teil des Läufers L ist abwechselnd aus weichmagnetischen Material und aus Permanentmagneten zusammengesetzt.

Im allgemeinen Fall sind Permanentmagnete Mq1, Mq2 ... mit jeweils alternierender Polarität im Mittelbereich des Läufers vorgesehen. Dabei ist der Magnet Mq1 zwischen zwei Weicheisenteilen W1′ und W1″ eingepaßt, deren hohe magnetische Leitfähigkeit einen praktisch widerstandslossen Anschluß der Permanentmagnete an die Luftspaltebene ergibt. Eine unterstützende Magnetisierung erfahren die Weicheisenpolelemente W des Läufers durch die mit ihrer Magnetisierungsrichtung nach der Bewegungsachse angeordneten Permanentmagnete Md′ und Md″. Wie Fig. 1 zu entnehmen ist, befindet sich auf der linken Läuferseite eine Magnetreihe Md1′, Md2′ ..., während rechts eine Magnetreihe mit den Magneten Md1″, Md2″ ... angeordnet ist. Es wird weiter unten noch darauf eingegangen, daß jeweils nur eine Magnetgruppe, also entweder Md oder Mq, bereits die volle Funktionsfähigkeit des Läufers ergibt. Sowohl die Kombination beider Magnetgruppen als auch der Verzicht auf die eine oder andere Gruppe kann sich je nach Anwendung als günstig erweisen.

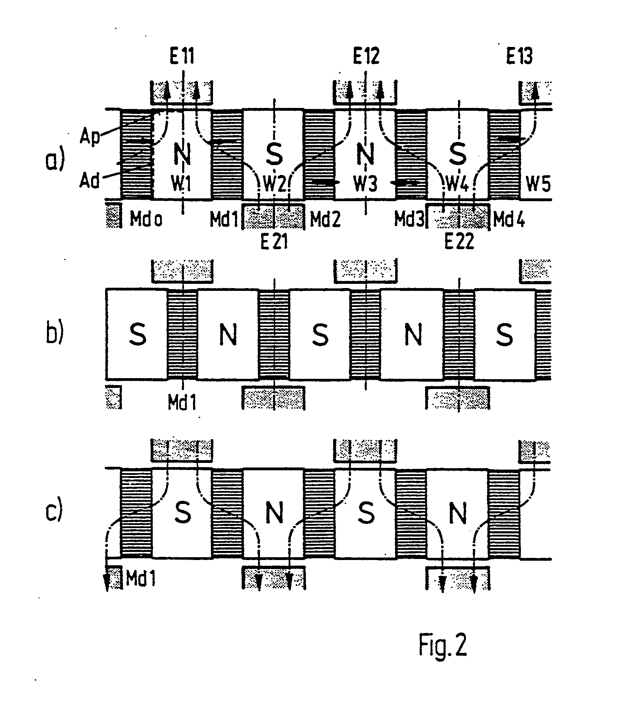

Die Funktion der Transversalflußmaschine in der hier beschriebenen Art kann mit Fig. 2 kurz in der Form erläutert werden, daß auf die von den Permanentmagneten in den Ankerelementen E1 und E2 hervorgerufenen magnetischen Flüsse hingewiesen wird. Im Läufer sind dabei die Magnete Md0, Md1 ... sowie die Weicheisenelemente W1, W2 ... gekennzeichnet.

In der Stellung a tritt dann der von den Magneten Md erzeugte Fluß in der Richtung vom Süd- zum Nordpol (in Längsrichtung) durch die Magnete hindurch und in den Weicheisenbereich, z. B. W1, über, um von dort den Luftspalt zu passieren und in das Polelement E11 einzutreten. Über dieses wird er um die Leiter S1 herumgeführt, kommt auf der anderen Läuferseite zurück, geht dort wieder getrieben durch die Permanentmagnete Md eine Polteilung in Längsrichtung, durchsetzt den Luftspalt, umschließt mit Hilfe von E21 die Spule S2 und shließt so die Flußbahn im Weicheisenelement W2.

Fig. 2b zeigt die Läuferposition, die sich nach Verschiebung um τ/2 genenüber Fig. 2a ergibt. Hierbei wird aufgrund der Symmetrie der Magnete genenüber den Polelementen ein magnetischer Fluß im Ankerkreis nicht wirksam.

Nach einer weiteren Verschiebung um τ/2 kann mit Fig. 2c gezeigt werden, daß der magnetische Fluß wieder einen Maximalwert annimmt, nun aber im Vergleich zu Fig. 2a die entgegengesetze Richtung aufweist. Damit ist deutlich gemacht, daß sich der die Spulen S1 und S2 umschließende magnetische Fluß in Abhängigkeit von der Stellung der Läuferelemente (gegenüber den Ankerelementen) verändert. Es wird gleichzeitig deutlich, daß auch die Abmessungen von Magneten und Weicheisenelemeten des Läufers auf die Größe des Flusses wesentlichen Einfluß haben. Der Änderung des magnetischen Flusses bei Bewegung entspricht eine in den Ankerleitern induzierte Spannung. Letztere bestimmt nach Multiplikation mit dem Strom die mechanische Leistung der Maschine.

Für die Größe der induzierten Spannung, die proportional der Flußänderung ist, erweist sich auch das Flächenverhältnis von Magnetquerschnitt zu Weicheisen-Polquerschnitt, also der Quotient $A_d/A_p$ als bedeutungsvoll. Mit zunehmendem Flächenverhältnis und $A_d/A_p > 1$ kann eine Feldlinienverdichtung unter den Polelementen E erzielt werden. $A_d$ und $A_p$ sind den in Fig. 2 strichliniert dargestellten Längen proportional. Durch die Sammleranordnung ist es möglich, die Luftspaltinduktion auch über die Remanenzinduktion der Magnete hinaus anzuheben. Die Wirksamkeit der Maschine kann hiderdurch verbessert werden. Eine Sammlerkonfiguration für die Anordnung der Magnete ist bekannt, z. B. auch durch EP-A-126 997. Ihre Nützlichkeit erweist sich z. B. darin, daß zuzätlich zu der möglichen Erhöhung der Luftspaltinduktion die Masse des Magnetmaterials minimiert werden kann. Dies behurt darauf, daß die Magnete im Punkt höchster Energiedichte betrieben werden können.

Es ist somit einleuchtend, daß neben der erhöhten Flußdichte im Luftspalt auch eine preisgünstige Ausführung im Hinblisk auf kleine Magnetmassen erreicht werden kann.

Fig. 2 zeigt, daß bei Bewegung des Rotors gegenüber den Polelementen in diesen und auch innerhalb der Weicheisenelemente des Rotors Feldrichtungsänderungen stattfinden. Es ist deshalb notwendig, die Weicheisenelemente in Rotor und Stator aus geschichtetem Material, insbesondere Blechen, oder aus verdichtetem Einsenpulver herzustellen.

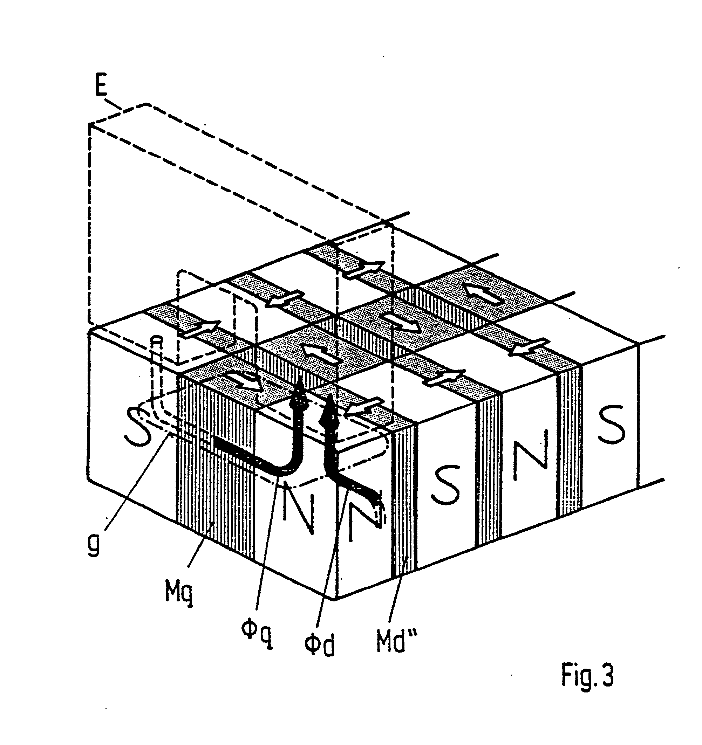

Fig. 3 gibt einen Hinweis auf die vorgesehene Magnetisierungsrichtund der einzelnen Permanentmagnete. Diese Richtung ist jeweils durch Pfeile auf der Oberseite der Magnete gekennzeichnet. Es ist ersichtlich, daß sich unter dieser Voraussetzung die Magnetisierung der Magnete Mq und Md unterstüzt. Durch deren gemeinsame Anwendung kann erreicht werden, daß sich auf Bahnen g (strichpunktierte Linie) nur eine kleiner bzw. gar kein magnetischer Fluß ausbildet. Dies ist gleichbedeutend mit einer Verstärkung des von den Magneten erzeugten, über den Luftspalt in die Ankerelemente E eintretenden nützlichen Magnetflusses. In Fig. 3 ist auch durch einen besonderen Pfeil angedeutet, daß sich z. B. im ersten Weicheisenelement eine zweite Flußkomponente $\varnothing_q$, die vom Magneten Mq erzeugt wird, derjeni-

gen Flußkomponente $\emptyset_d$ ünberlagert, die von den Magneten Md erregt wird.

Auch die Anordnung Mq ist in Fig. 3 so vorgenommen, daß der Flächenquotient $A_d/A_p$ größer als 1 ist, also eine Flußkonzentration stattfindet. Auch hierbei gelten die im Falle der Md-Magnete beschriebenen Vorteile.

Im Vergleich mit der bekannten Flachmagnetanordnung sind nun die Permanentmagnete im Läufer um jeweils 90° gegenüber der Luftspaltebene gedreht. Durch die hiermit ermöglichte Querschnittsvergrößerung läßt sich das Material der Permanentmagnete zur Erzeugung eines erhöten Luftsplatflusses und im Verbindung damit zur Erhöhung der Kraftdichte bzw. zur Erzielung einer erhöten induzierten Spannung einsetzen. Darüber hinaus werden kleinere Polteilungen als ohne die Anwendung des Weicheisenmaterials möglich, da sich die Feldlinien durch die Weicheisenpolelemente im Läufer stark bündeln lassen.

Die in Fig. 1 beschriebene Anordnung ist normalerweise nur ein Teil einer elektrischen Maschine. Es ist nun die Frage zu beantworten, welche Form für die Maschine im Hinblick auf ihre Wirkungsweise und die Baubarkeit besonders zweckmäßig ist.

Als günstig darf sicher, bezeichnet werden, wenn sich eine geringe Zahl einfach geformter, möglichst ebener Spulen ergibt und die Wirkungsweise zu weitgehend kontinuierlicher Kraftbildung führt. Letzteres bedeutet, daß zeitabhängige Kraftschankungen klein sind und Kommutierungseinflüsse nur eine geringe Rolle spielen. Es ist offensichtlich, daß die genannten Problembereiche eine gewisse Kopplung aufweisen. Einfache Bauform mit geringer Zahl selbständiger Stromkreise (Stränge) bedeutet ein gewisses Maß an pulsierendem Anteil inder Kraft, wie in der WO 87/02525 beschrieben wurde.

Beim vorliegenden Maschinenkonzept handelt es sich um eine wechselrichtergespeiste Maschine, deren Wirkungsstränge über elektronische Stellglieder mit Energie versogt werden. Die bei geringer Strangzahl auftretenden Kraftpulsationen lassen sich bei ausreichender Bemessung der Stellglieder und entsprechendem Steuerhub der Spannung elektronisch ausgleichen. Dieser Ausgleich ist im allgemeinen nur bei kleiner Drehzahlen notwendig. Infolge der kleiner Polteilung ist die Anregungsfrequenz vergleichsweise hoch und die an die Welle der Maschine weitergegebene Geschwindigkeitsänderung ist umso kleiner je höher die Anregungsfrequenz liegt.

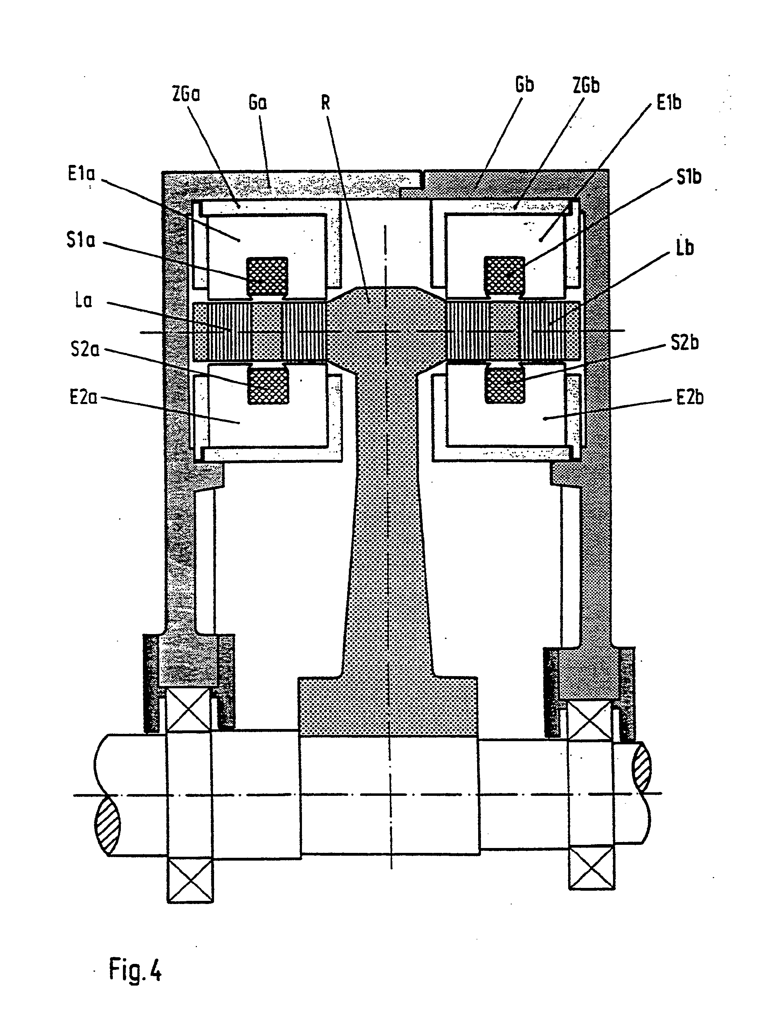

Die einfachste Maschinenbauform enthält entsprechend Fig. 4 zwei Stränge der Statorwicklung mit insgesamt vier Ankerspulen. Zwei Spulen jeder Ankerseite gehören zu einem Strang und führen gleichgerichtete Ströme. Linke und rechte Seite werden mit Strömen einer Phasenverschiebung von 90° betrieben, so daß auch bei einer Maschine ohne Schwankungsausgleich aud jeder Position angefahren werden kann. Die Schwankungsamplitude beträgt dabei etwa 30 % der mittleren Antriebskraft. Die zweisträngige Ankeranordnung besitzt somit ringförmige Spulen in ebener Ausführung, die sehr einfach herstellbar und mit den Polelementen aus Weicheisen integrierbar sind. In Fig. 4 bezeichnen S1a und S2a die Ankerspulen des Stranges a und S1b sowie S2b die Ankerspulen des Stranges b. Die Polelemente E1a, E2a sind dem Strang a zugeordnete Weicheisenteile, wobei die unteren Elemente gegenüber den oberen um eine Polteilung versetz sind. Für die im Querschnitt gezeichneten Läuferelemente der zylindrischen Läuferansätze La un Lb gilt eine der Fig. 1 entsprechende Anordnung.

Durch den zeitlichen Versatz der Stromführung von Strang b gegenüber a ist auch eine entsprechende örtliche Verschiebung um $\tau/2$ bedingt. Hierdurch ergibt sich eine Reduzierung der durch Felddichteschwankunden hervorgerufenen Kraftpulsationen ähnlich der Wirkung einer Läuferschrägung.

Durch die in Fig. 4 gegebene symmetrische Anordnung der Statoren in Bezug auf den Rotor R, der mit einem scheibenförmigen Mittelteil ausgeführt ist, wird auch eine für die Montage günstige Form erreicht. Die kleinste Einheit, eine Stranghälfte, ist mit Hilfe eines Zwischengehäuses ZG mit der zugehörigen Gehäuseschale G verbunden.

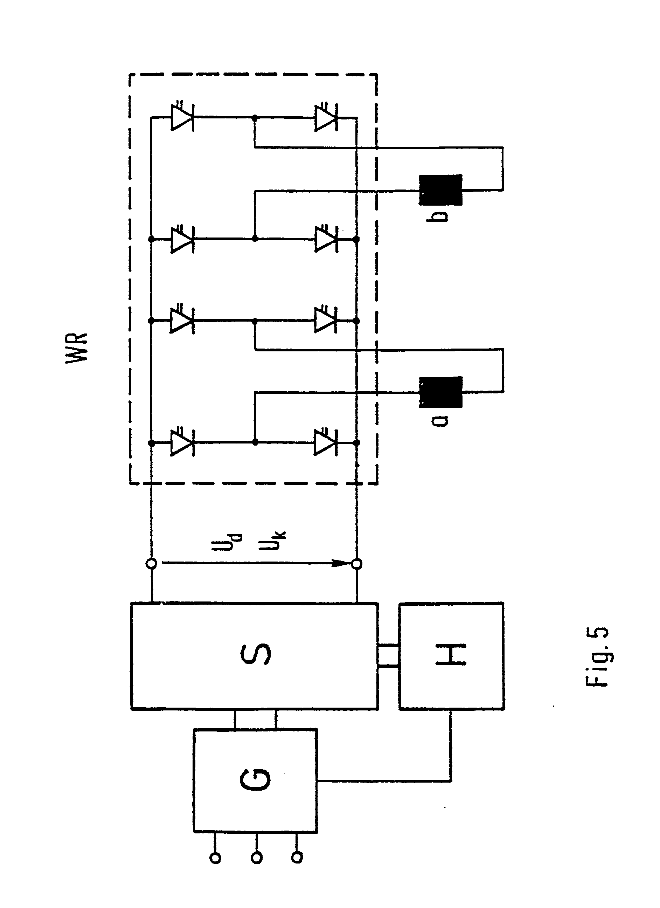

In Fig. 5 ist das Schaltungskonzept der Energieversorgung einer zweisträngigen Maschine mit den Strängern a und b dargestellt. Der Wechselrichter WR besteht aus zwei 4-Quadrantensteuern. Hierbei sind nur die Hauptschaltelemente, nicht aber z. B. die Blindstromdioden gezeichnet. Wird der Wechselrichter WR zur Spannungsanpassung im Pulsbetrieb getaktet, so kann die Gleichspannung $U_d$ z. B. über einen ungesteuerten Gleichrichter G aus dem dreisträngigen Netz gewonnen werden. In diesem Falle erübrigen sich die Baugruppen H und S.

Wird eine beschleunigte Kommutierung bei Vermeidung des Pulsbetriebes von WR angestrebt, so werden einige weitere Funktionen benötigt. Die während der Arbeitsphase wirksame Spannung $U_d$ wird durch ein Gleichspannungs-Stellglied innerhalb des Gerätes S auf den erfolderlichen Wert eingestellt (geregelt). In der dem Kommutierungstakt entsprechenden Zeit wird mit Hilfe von H eine dieser Zeit und der Größe des Stromes umgekehrt proportionale Spannung $U_k$ gebildet, die über ein Schaltelement in S an den Wechselrichter WR gelegt wird. Dabei kann der Hochsetzsteller H die Höhe der Kommutierungsspannung z. B. drehzahl- oder laststromabhängig verändern.

Anordnungen mit höherer Strangzahl lassen sich unter Beibehaltung des grundsätzlichen Aufbaus (Fig. 4) durch eine seitliche Erweiterung angeben. So wird z. B. eine viersträngige Maschine durch jeweils zwei Stränge auf einer Seite der Läuferscheibe aufgebaut. Die Ausdehnung der Polelemente in axialer Richtung geht bei konstanter Gesamtkraft entsprechend zurück. Auf einen elektronischen Kraftschwankungsausgleich für kleine Betriebsfrequenezen kann in diesem Fall bereits verzichtet werden. Das gewählte Beispiel für den Maschinenaufbau ist zwar konstruktiv günstig, nicht aber die einzig denkbare Lösung.

So ist z. B. die Anordnung der Magnete auch direkt in der Rotorscheibe, also gegenüber Fig. 4 um 90° gedreht möglich und ausführbar. Die Statoranordnung ändert sich hierdurch entsprechend.

Die Motorbauform nach Fig. 4 weist gegenüber der scheibenförmigen Anordnung jedoch insofern Vorteile auf, als sie eine axiale Verschiebung der Ankerelemente (mit deren Wicklungen) bei entsprechender Ausführung des Gehäusses zuläßt. Es ist ersichtlich, daß durch eine Verschiebung der beiden Ankerteile nach außen eine Feldschächung einsetzt. Bei einer Verschiebung, die gleich der Breite der Pole ist, wird die Feldstärke 0 erreicht. Da es sich hier normalerweise nur um kleine Abmessungen (im Zentimeterbereich) handelt, kann diese Stellmöglichkeit der Feldbeeinflussung z. B. bei Fahrzeugmotoren zur Spannungsbegrenzung genutzt werden, ohne daß eine nennenswerte Verbreiterung der Maschine entseht. Auch für Generatoren kann dieser Eingriff zur Spannungsbegrenzung herangezogen werden. Der Stellmechanismus hat dabei die Aufgabe, die ringförmigen Ankereinheiten gegenüber der Läufermitter unter Berücksichtigung gewisser magnetischer Kräfte axial zu bewegen. Bei symmetrischen Verschiebungen beider Ankerseiten entsteht dabei für die Lager der Maschine keine zuzätzliche Belastung.

## Patentansprüche

1. Wechselstrommaschine mit einem Stator (A1, A2) mit zwei feststehenden, in Drehrichtung verlaufenden Ankerspulen (S1, S2), jede der Ankerspulen (S1, S2) ist von einer Vielzahl von quer zur jeweils zugehörigen Ankerspule angeordneten, im wesentlichen U-förmigen Weicheisenelementen (E) auf drei Seiten umgeben, der Mittelabstand zweier aufeinanderfolgender Weicheisenelemente (E11, E12; E21, E22) entspricht jeweils zwei Polteilungen, die die Statorpole bildenden freien Enden der Weicheisenelemente (E11, E12) der einen Ankerspule (S1) begrenzen die eine Seite und die die Statorpole bildenden freien Enden der Weicheisenelemente (E21, E22) der anderen Ankerspule (S2) begrenzen die andere Seite eines Spaltes, die freien Enden der Weicheisenelemente (E11, E12; E21, E22) auf den beiden Seiten des Spaltes sind um eine Polteilung in Drehrichtung gegeneinander versetzt, und mit einem Rotor (R) mit daran angeordnetem Erregerteil, das Erregerteil (L) umfaßt in diesem Spalt zu beiden Seiten des Spaltes hin und den Statorpolen gegenüberliegend permanentmagnetisch erregte Reihen von Erregerpolen mit längs und quer zur Drehirichtung je Polteilung abwechselnder Polarität, dadurch gekennzeichnet, daß die Erregerpole als den Statorpolen gegenüberliegende Weicheisenblöcke (W) ausgebildet sind, deren Querschnitt dem Querschnitt der freien Enden der Weicheisenelemente (E11, E12; E21, E22) des Stators entspricht, daß zwischen den Weichensenblöcken (W) des Rotors (R) in der Spaltebene längs und/oder quer zur Drehrichtung magnetisierte Permanentmagnete (Md1, Md2) mit abwechselnder Polarität angeordnet sind und daß die den Weicheisenblöcken (W) gegenüberliegende Stirnfläche der Permanentmagnete (Md1, Md2) größer als die halbe Stirnfläche der durch die Weicheisenblöcke (W) gebildeten Erregerpole am Luftspalt ist.

2. Wechselstrommaschine nach Anspruch 1, dadurch gekennzeichnet, daß das Erregerteil (L) am Rotor (R) axial angeordnet ist.

3. Wechselstrommaschine nach Anspruch 1, dadurch gekennzeichnet, daß das Errregerteil (L) am Rotor (R) radial angeordnet ist.

4. Wechselstrommaschine nach einem der vorhergehenden Ansprüche, dadurch gekennzeichnet, daß die Statorpole (E11, E12) auf der einen Seite des Spaltes zu den Statorpolen (E21, E22) auf der anderen Seite des Spaltes um eine Polteilung in Drehrichtung versetzt angeordnet sind und daß die Ankerspulen (S1, S2) mit gleichphasigem Strom gespiest werden.

5. Mehrphasige elektrische Maschine, dadurch gekennzeichnet, daß mehrere Wechselstrommaschinen (E1a, E2a, La; E1b, E2b, Lb) nach einem der Ansprüche 1 bis 4 in einem Maschinengehäuse (G) in Achsrichtung versetzt nebeneinander angeordnet sind, wobei für die einzelnen Maschinen die Ströme in den Ankerspulen (S1a, S2a; S1b, S2b) gegeneinander phasenverschoben und die Polelemente der Statoren in Umfangsrichtung entsprechend versetzt angeordnet sind, und daß die Rotoren (R) mit den Erregereinheiten auf eine gemeinsame Welle wirken.

6. Maschine nach Anspruch 5, dadurch gekennzeichnet, daß die Wechselstrommaschinen paarweise angeordnet sind, daß je zwei Ankerwicklungen der einzelnen Maschinenpaare zu einem Wicklungsstrang zugeordnet sind und gleichgerichtete Ströme führen.

7. Maschine nach Anspruch 5 oder 6, dadurch gekennzeichnet, daß die beiden Wechselstrommaschinen eines Maschinenpaares mit Strömen mit einer Phasenverschiebung von 90° betrieben werden.

8. Maschine nach Anspruch 5, 6 oder 7, dadurch gekennzeichnet, daß die Wechselstrommaschinen paarweise angeordnet sind und die Erregerteile der einzelnen Maschinenpaare auf einem gemeinsamen Rotor angeordnet sind (Fig. 4).

## Claims

1. An A.C. generator having a stator (A1, A2) with two fixed armature coils (S1, S2) extending in the direction of rotation, each of the armature coils (S1, S2) is surrounded on three sides by a plurality of essentially U-shaped soft iron elements (E) disposed at right angles to the appropriate armature coil, the central distance between two successive soft iron elements (E11, E12; E21, E22) corresponds to two pole pitches, the free ends of the soft iron elements (E11, E12) of one armature coil (S1) forming the stator poles limit one side and the free ends of the soft iron elements (E21, E22) of the other armature coil (S2) forming the stator poles limit the other side of a gap, the free ends of the soft iron elements (E11, E12; E21, E22) on both sides of the gap are displaced with respect to one another by one pole pitch in the direction of rotation, and having a rotor (R) with an exciting part disposed thereon, in this gap towards both sides of the gap and opposite the stator poles the exciting part (L) comprises permanently exciting poles with alternating polarity for each pole pitch along and at right angles to the direction of rotation, **characterised in that** the exciting poles are constructed as soft iron blocks (W) opposite the stator poles, with their cross section corresponding to the cross section of the free ends of the soft iron elements (E11, E12; E21, E22) of the stator, in that between the soft iron blocks (W) of the rotor (R) are disposed permanent magnets (Md1, Md2) with alternating polarity which are magnetised in the plane of the gap along and(or at right angles to the direction of rotation and in that the front surface of the permanent magnets (Md1, Md2) opposite the soft iron blocks (W) is larger than half the front surface of the exciting poles at the interferric gap formed by the soft iron blocks (W).

2. An A.C. generator according to Claim 1, **characterised is that** the exciting part (L) is disposed axially on the rotor (R).

3. An A.C. generator according to Claim 1, **characterised in that** the exciting part (L) is radially disposed on the rotor (R).

4. An A.C. generator according to one of the preceding Claims, **characterised in that** the stator poles (E11, E12) are displaced on one side of the gap to the stator poles (E21, E22) and on the other side of the gap by one pole pitch in the direction of rotation and in that the armature coils (S1, S2) are supplied with equiphase current.

5. A multiphase electrical machine, **characterised in that** several A.C. generators (E1a, E2a, La; E1b, E2b, Lb) according to one of Claims 1 to 4 are displaced next to one another in a machine housing (G) in the axial direction, and for the individual machines the currents in the armature coils (S1a, S2a; S1b, S2b) are mutually out-of-phase and the pole elements of the stators are correspondingly displaced in the circumferential direction, and in that the rotors (R) act with the exciting units on a common shaft.

6. A machine according to Claim 5, **characterised in that** the A.C. generators are disposed in pairs, in that two armature windings of the individual machine pairs are assigned to one winding branch and carry rectified currents.

7. A machine according to Claim 5 or 6, **characterised in that** the two A.C. generators of a machine pair are operated with currents having a phase displacement of 90°.

8. A machine according to Claim 5, 6 or 7, **characterised in that** the A.C. generators are disposed in pairs and the exciting parts of the individual machine pairs are disposed on a common rotor (Fig. 4).

## Revendications

1. Machine à courant alternatif, comprenant, d'une part, un stator (A1, A2) comportant deux bobines d'induit (S1, S2) fixes et s'étendant suivant la direction de rotation, chacune de ces bobines d'induit (S1, S2) étant entourée sur trois côtés par de multiples éléments en fer doux (E) essentiellement en U et disposés transversalement à la bobine d'induit chaque fois associée, l'écartement moyen de deux éléments en fer doux (E11, E12; E21, E22) successifs correspondant chaque fois à deux pas polaires, les extrémités libres des éléments en fer doux (E11, E12) de l'une (S1) des bobines d'induit qui constituent des pôles du stator délimitant un premier côté d'une fente et les extrémités libres des éléments en fer doux (E21, E22) de l'autre bobine d'induit (S2) qui constituent des pôles du stator délimitant le second côté de cette fente, les extrémités libres des éléments en fer doux (E11, E12 ; E21, E22) qui sont situées sur les deux côtés de la fente étant décalées d'un pas polaire les unes par rapport aux autres suivant la direction de rotation, et, d'autre part, un rotor (R) comportant, disposée sur lui, une partie formant inducteur, cette partie formant inducteur (L) comprenant des séries de pôles d'inducteur qui sont soumis à un flux par des moyens du type aimant permanent situés dans ladite fente, vers les deux côtés de cette dernière et en faisant face aux pôles du stator, et qui ont des polarités qui alternent à chaque pas polaire dans le sens longitudinal et dans le sens transversal par rapport à la direction de rotation, caractérisée en ce que les pôles d'inducteur sont réalisés sous la forme de blocs en fer doux (W) qui font face aux pôles du stator et dont la section transversale correspond à celle des extrémités libres des éléments en fer doux (E11, E12 ; E21, E22) de ce stator, en ce que des aimants permanents (Md1, Md2) à aimantation dirigée dans le sens longitudinal et/ou dans le sens transversal par rapport à la direction de rotation et à polarités alternées sont disposés entre les blocs en fer doux (W) du rotor (R) dans le plan de la fente et en ce que la surface frontale des aimants permanents (Md1, Md2) qui fait face à un bloc en fer doux (W) a des dimensions supérieures à la moitié de la surface frontale que chaque pôle d'inducteur formé par un bloc en fer doux (W) présente à l'endroit de l'entrefer.

2. Machine à courant alternatif suivant la revendication 1, caractérisée en ce que la partie formant inducteur (L) est disposée axialement sur le rotor (R).

3. Machine à courant alternatif suivant la revendication 1, caractérisée en ce que la partie formant inducteur (L) est disposée radialement sur le rotor (R).

4. Machine à courant alternatif suivant l'une des revendications précédentes, caractérisé en ce que les pôles de stator (E11, E12) situés sur l'un des côtés de la fente sont disposés d'une manière décalée d'un pas polaire suivant la direction de rotation par rapport aux pôles de stator (E21, E22) situés sur l'autre côté de la fente et en ce que les bobines d'induit (S1, S2) sont alimentées au moyen de courants en phase.

5. Machine électrique polyphasée, caractérisée en ce que plusieurs machines à courant alternatif (E1a, E2a, La ; E1b, E2b, Lb) suivant l'une des revendications 1 à 4 sont disposées côte à côte dans un boîtier de machine (G) d'une manière décalée suivant la direction axiale, tandis que, pour les différentes machines, les courants passant dans les bobines d'induit (S1a, S2a ; S1b, S2b) sont déphasés entre eux et les éléments polaires des stators sont disposés d'une manière décalée correspondante suivant la direction périphérique et en ce que les rotors (R) comportant les parties formant inducteur agissent sur un arbre commun.

6. Machine suivant la revendication 5, caractérisée en ce que les machines à courant alternatif sont disposées par paire et en ce que deux enroulements d'induit des différentes machines de chaque paire sont chaque fois associés à une branche d'enroulement de phase et transportent des courants redressés.

7. Machine suivant l'une des revendications 5 ou 6, caractérisée en ce que les deux machines à courant alternatif d'une paire de machines fonctionnent avec des courants présentant un déphasage de 90°.

8. Machine suivant l'une des revendications 5 à 7, caractérisée en ce que les machines à courant alternatif sont disposées par paire et en ce que les parties formant inducteur des différentes machines de chaque paire sont disposées sur un rotor commun (figure 4).

Fig.1

Fig. 2

Fig. 3

Fig. 4

WR

$U_d$ $U_k$

b

a

S

H

G

Fig. 5